(19) Europäisches Patentamt
European Patent Office
Office européen des brevets

(11) **EP 4 783 425 A1**

(12) **EUROPEAN PATENT APPLICATION**
published in accordance with Art. 153(4) EPC

(43) Date of publication:
29.07.2026 Bulletin 2026/31

(21) Application number: 24868083.7

(22) Date of filing: 30.08.2024

(51) International Patent Classification (IPC):
*H02K 5/06* (2006.01)

(86) International application number:
PCT/JP2024/031149

(87) International publication number:
WO 2025/063003 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.09.2023 JP 2023159276

(71) Applicants:
• TPR CO., LTD.
Tokyo 100-0005 (JP)
• TPR INDUSTRY CO., LTD.
Sagae-shi, Yamagata 990-0561 (JP)

(72) Inventors:
• SATO, Takashi
Sagae-shi, Yamagata 990-0561 (JP)
• TOKAIRIN, Yasutomo
Sagae-shi, Yamagata 990-0561 (JP)
• SEINO, Kazuki
Sagae-shi, Yamagata 990-0561 (JP)
• KAWAI, Kiyoyuki
Tokyo 100-0005 (JP)

(74) Representative: Novagraaf International SA
Chemin de l'Echo 3
1213 Onex, Geneva (CH)

(54) **INSERT MEMBER FOR ROTARY ELECTRIC MACHINE**

(57) [Problem] To provide an insert member capable of favorably controlling thermal conductivity.

[Solution] An insert member in the form of a substantially cylindrical shape, which is to be cast into an aluminum alloy motor case of a rotary electric machine, has a plurality of concave and convex portions formed on its outer peripheral surface, wherein when a line along a contour of the outer peripheral surface including a contour of the concave-convex portion within a range of a predetermined axial length, in one cut surface which is one of cut surfaces appearing when the insert member is cut into two halves along an axial direction by a virtual plane including the central axis, is defined as a contour line, an outer peripheral surface length ratio, which is a value obtained by dividing a length of the contour line by the predetermined axial length, is 1.15 or more.

FIG. 1

EP 4 783 425 A1

**Description**

[Technical Field]

The present invention relates to an insert member for a rotary electric machine.

[Background Art]

In general, aluminum alloys are often used as structural members for motor cases of rotary electric machines. In addition, in a motor case, a high-strength member made of an iron-based material and formed into a substantially cylindrical shape may be used as an insert member in order to reinforce a portion in which a stator is disposed. In relation to this, it has been proposed to provide concaves and convexes on the outer peripheral surface of the insert member that is integrated with the motor case by press-fitting or casting (for example, see Patent Literatures 1 and 2).

[Citation List]

[Patent Literature]

[Patent Literature 1] Japanese Patent Laid-Open No. 2001-169500
[Patent Literature 2] Japanese Patent No. 6655560

[Summary of Invention]

[Technical Problem]

However, an insert member formed from an iron-based material exhibits inferior thermal conductivity in comparison with an aluminum alloy, which is commonly used as a structural member of a motor case. Therefore, while the concaves and convexes on the outer peripheral surface of the insert member increase the joining strength thereof with the motor case, the heat generated by heating elements such as the stator and the like cannot be efficiently dissipated to the outside, which could result in a reduction in the output of the motor or a reduction in the magnetic force of the magnets used in the motor.
The technique of the present invention has been developed in view of the actual circumstances described above, and an object thereof is to provide an insert member capable of favorably controlling thermal conductivity at an interface between the insert member and a motor case.

SOLUTION TO PROBLEM

In order to solve the above problems, the present invention adopts the following configurations. An insert member for a rotary electric machine according to one aspect of the technology of the present disclosure is a substantially cylindrical insert member to be cast into an aluminum alloy motor case of the rotary electric machine, wherein

a concave-convex portion including concave portions and convex portions is formed on an outer peripheral surface of the insert member; and
when a line along a contour of the outer peripheral surface including a contour of the concave-convex portion within a range of a predetermined axial length, in one cut surface which is one of cut surfaces appearing one by one on both sides of a central axis of the insert member when the insert member is cut into two halves along an axial direction by a virtual plane including the central axis, is defined as a contour line, an outer peripheral surface length ratio, which is a value obtained by dividing the length of the contour line by the predetermined axial length, is 1.15 or more.

In addition, when a line segment parallel to an inner peripheral surface of the insert member is superimposed on the one cut surface in the range of the predetermined axial length, the insert member defines a substantive portion region in which, on the line segment, the insert member overlaps with the line segment and a non-substantive portion region in which, on the line segment, the insert member does not overlap with the line segment; on the line segment, a value indicating a proportion of the substantive portion region within the range of the predetermined axial length is defined as a substantive portion ratio; a diagram, in which in the one cut surface of the insert member, a value of the substantive portion ratio at each measurement point, which is obtained by moving the line segment from a tip end portion of a convex portion that protrudes most in the concave-convex portion toward a base end portion side of the convex portion along a height direction of the concave-convex portion at a predetermined pitch, is sequentially plotted, with a horizontal axis representing the substantive portion ratio and a vertical axis representing a distance from the tip end portion in the height direction as a measurement height, is defined as a substantive portion aggregation chart; an average of the substantive portion ratios at the respective measurement points based on a plurality of the one cut surfaces is defined as an average substantive portion ratio, and the substantive portion aggregation chart in which the average substantive portion ratio is sequentially plotted is defined as an average substantive portion aggregation chart; in the average substantive portion aggregation chart, a position where the average substantive portion ratio is 0 is defined as a tip end portion on the chart, and a position where the average substantive portion ratio sequentially plotted from the tip end portion side toward the base end portion side exceeds 0.98 for the first time is defined as a base end portion on the chart; and when a distance from the tip end portion on the chart to the base end portion on the chart is defined as an average maximum height of the concave-convex portion, the average maximum height of the concave-convex portion may be 0.15 mm or more and 1.50 mm or less.

Moreover, when the average substantive portion ratio at a position moved 0.10 mm in height from the base end portion on the chart toward the tip end portion on the chart is denoted as A, with a value obtained by dividing the outer peripheral surface length ratio by A being defined as a first interface parameter, the first interface parameter may be 1.30 or more.

Further, when a half of a value obtained by subtracting an inner diameter of the insert member from an outer diameter thereof is defined as a thickness of the insert member, the thickness of the insert member may be 0.8 % or more of the outer diameter of the insert member.

Furthermore, the outer peripheral surface may be subjected to a surface roughening treatment.

In addition, the outer peripheral surface of the insert member may have, in a part thereof in the axial direction, at least one of a region in which the outer peripheral surface length ratio is less than 1.15 and a region in which the first interface parameter is less than 1.30.

Moreover, in the average substantive portion aggregation chart, when a value obtained by subtracting the average substantive portion ratio at a certain measurement height from the average substantive portion ratio at the base end portion on the chart is defined as an average non-substantive portion ratio, with the average non-substantive portion ratio at a position moved 0.10 mm in height from the base end portion on the chart toward the side of the tip end portion on the chart being denoted as B, $0.10/B \leq 1.30$ may be satisfied.

Further, in the average substantive portion aggregation chart, when a value obtained by subtracting the average substantive portion ratio at a certain measurement height from the average substantive portion ratio at the base end portion on the chart is defined as an average non-substantive portion ratio, with the average non-substantive portion ratio at a position moved 0.10 mm in height from the base end portion on the chart toward the side of the tip end portion on the chart being denoted as B, $0.10 \times B \geq 0.01$ may be satisfied.

Furthermore, in the average substantive portion aggregation chart, a height from the base end portion on the chart to a position where the average substantive portion ratio is 0.30 may be 0.40 mm or less.

Also, in the average substantive portion aggregation chart, a second interface parameter, which is a value obtained by dividing the outer peripheral surface length ratio by a height from the base end portion on the chart to a position where the average substantive portion ratio is 0.30, may be 4.00 or more.

[Advantageous Effects of the Invention]

According to the present invention, it is possible to provide an insert member capable of favorably controlling thermal conductivity at an interface between the insert member and a motor case.

[Brief Description of Drawings]

FIG. 1 is an overall view of an insert member for a rotary electric machine according to an embodiment, and an enlarged view of a part of an outer peripheral surface thereof.
FIG. 2 is a cross-sectional view illustrating an example of a predetermined cut surface of the insert member for a rotary electric machine according to the embodiment.
FIG. 3 is an average substantive portion aggregation chart illustrating a relationship between measurement heights and average substantive portion ratios of the insert member for a rotary electric machine according to the embodiment.

[Mode for carrying out the Invention]

Hereinafter, an embodiment of the present invention will be described with reference to the drawings. The configurations described in the following embodiment are not intended to limit the technical scope of the invention unless otherwise specified. Each configuration in the following embodiment, a combination thereof, and the like are merely examples, and additions, omissions, substitutions, and other modifications of configurations can be made as appropriate without departing from the gist of the present invention.

<Embodiment>

[Structure]

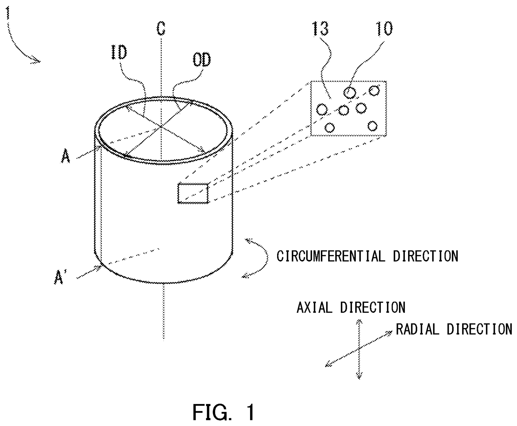

FIG. 1 is an overall view of an insert member 1 for a rotary electric machine (hereinafter referred to as "insert member 1") according to an embodiment, and an enlarged view of a part of an outer peripheral surface thereof. In the present embodiment, a direction along a central axis C of the insert member 1 is defined as an axial direction, and a direction orthogonal to the axial direction and directed from the central axis C toward an outer peripheral surface side of the insert member 1 is defined as a radial direction. In addition, a direction along an outer peripheral surface of the insert member 1 and around the central axis C is referred to as a circumferential direction. The axial direction, the radial direction, and the circumferential direction are merely directions for indicating relative positions of respective elements in the insert member 1.

The insert member 1 according to the present embodiment is, for example, a cast iron material formed in a substantially cylindrical shape centered on the central axis C, and has a plurality of convex portions 10 formed on its outer peripheral surface (i.e., its surface). Here, portions relatively recessed with respect to the convex portions 10 are referred to as "concave portions 13", and a structure including the convex portions 10 and the concave portions 13 is referred to as a "concave-convex portion". The rotary electric machine to which the present invention is applied is, for example, a rotary electric machine used in an electric vehicle or the like. However, the rotary electric machine to which the present invention is applied is not limited thereto. In the present embodiment, an outer diameter OD of the insert member 1 is formed within a range of 150 mm to 300 mm, but may be changed as appropriate depending on the use. In addition, the outer diameter OD is a value corresponding to a distance between two mutually parallel planes when the insert member 1 is placed between the two mutually parallel planes, with the tip end portions 11 of the convex portions 10 on the outer peripheral surface of the insert member 1 being brought into contact with the two mutually parallel planes. Here, the thickness of the insert member 1 is set to half of the value obtained by subtracting an inner diameter ID of the insert member 1 from its outer diameter OD. The thickness of the insert member 1 is preferably 0.8% or more of the outer diameter OD of the insert member 1. When the thickness of the insert member 1 is less than 0.8% of the outer diameter OD, the strength thereof is insufficient when the insert member 1 and the motor case are integrated, thus increasing the risk of cracks occurring in the insert member 1. Further, it is desirable that the weight of the insert member 1 be light, and hence the thickness of the insert member 1 is preferably less than about 4 % of the outer diameter OD.

The rotary electric machine includes, for example, components such as a rotating shaft, a rotor, a stator, a motor case, bearings, etc. The motor case has a tubular portion with its inside hollowed out in a cylindrical shape. The stator is generally formed of an electromagnetic steel sheet or the like, and is fitted to the inner peripheral portion of the tubular portion. The insert member 1 is to be placed in a portion of the motor case where it is to be fitted with the stator. Here, the insert member 1 is used by being cast into the inner peripheral portion of the motor case made of an aluminum alloy. Accordingly, the motor case and the insert member 1 together form a composite structure in which at least a part of the outer peripheral surface of the insert member 1 is covered with the aluminum alloy. Here, the stator fitted into the inner peripheral portion of the insert member 1 generates heat as the rotary electric machine operates, but by forming the outer peripheral surface of the insert member 1 into an appropriate form, the thermal conductivity at an interface between the insert member 1 and the motor case can be favorably controlled, thereby allowing the generated heat to be efficiently dissipated into the motor case.

The material of the insert member 1 mentioned above is preferably cast iron or similar materials having higher thermal conductivity as compared with steel, but it is not particularly limited thereto. Typically, it is possible to use flake graphite cast iron such as a material equivalent to JIS FC250 in consideration of thermal conductivity and workability.

The concave-convex portion on the outer peripheral surface of the insert member 1 may be formed by a method of transferring the concave-convex portion of a coating agent in a centrifugal casting method, by a method of directly performing machining such as cutting on the outer peripheral surface of the insert member, by a method of performing a surface roughening treatment, or by a combination of these methods. The surface roughening treatment includes, for example, thermal spraying, cold spraying, shot blasting, and other surface treatments. A material used for thermal spray is, for example, an aluminum alloy or the like, but is not particularly limited. However, the material of the insert member 1 and the method of forming the concave-convex portion mentioned above are merely examples, and are not particularly limited.

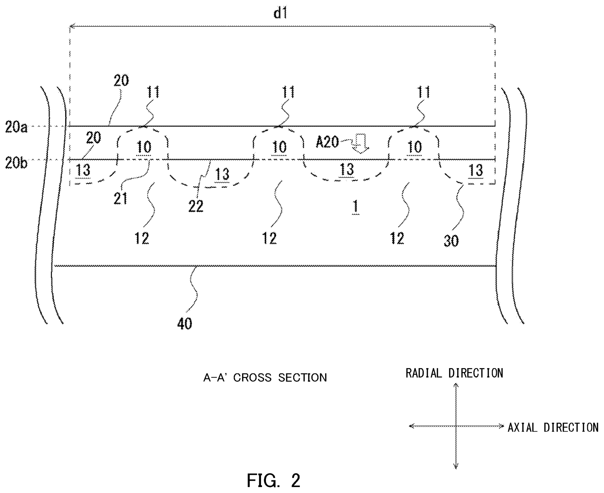

FIG. 2 is a cross-sectional view illustrating an example of a predetermined cut surface of the insert member 1 according to the embodiment. The predetermined cut surface in the present embodiment is one of cut surfaces that appear on both sides of the central axis C when the insert member 1 is cut into two halves along the axial direction by a virtual plane including the central axis C of the insert member 1. The length of one cut surface in the axial direction is equal to or greater than a length d1 to be described later. In FIG. 2, an A-A' cross section in FIG. 1 is illustrated as an example of the predetermined cut surface. In the following, the concave-convex portion provided on the insert member 1 according to the present embodiment will be described using FIG. 2.

The convex portions 10 in the concave-convex portion are part of the insert member 1 and is formed on the outer peripheral surface of the insert member 1. The convex portions 10 may be arranged in plurality in both the axial and circumferential directions, either with discontinuous and irregular (random) arrangement positions and densities, or with continuous and regular arrangement positions and densities. In addition, the convex portions 10 each have a tip end portion 11 and a base end portion 12, and are each formed so as to protrude from the base end portion 12 toward the tip end portion 11 outward in the radial direction of the insert member 1. However, the shapes of the convex portions 10 and the concave portions 13 are not particularly limited.

Further, on the outer peripheral surface of the insert member 1, the formation of the plurality of convex portions 10 may be limited to certain portions thereof, or machining may be performed such as cutting off some of the plurality of convex portions 10. Accordingly, the plurality of convex portions 10 may be formed only in a partial region of the outer peripheral surface of the insert member 1.

The convex portions 10 may be formed by being cast while applying a centrifugal force using a centrifugal casting method. At this time, the tip end portions 11 of the convex portions 10 are formed with reference to the inner peripheral surface of a mold, and hence, if the inner peripheral surface of the mold is a perfect circle, the distances of the tip end portions 11 from the central axis C of the insert member 1 are substantially equal, whereas the distances of the base end portions 12 from the central axis C may be uneven. Therefore, the heights of the convex portions 10 are measured with reference to the tip end portions 11 in the process of deriving an average maximum height h1 of the concave-convex portion using a substantive portion aggregation chart to be described later. However, the method of forming the convex portions 10 is not limited thereto, but for example, the convex portions 10 may be formed by performing machining such as cutting on an outer peripheral surface of a cylindrical member.

In addition, the shapes of the convex portions 10 are not particularly limited. The convex portions 10 may have, for example, a shape continuously extending in a spiral manner or a shape continuously extending in an annular manner along the circumferential direction. For example, the convex portions 10 can be formed in a spiral or annular shape by directly performing machining such as cutting on the outer peripheral surface of the insert member 1. The shapes of the convex portions 10 may be any shape that is effective in the physical cutting test, thermal conductivity measurement, surface temperature simulation, and compactness evaluation, which will be described later.

The region where the concave-convex portion is formed on the outer peripheral surface of the insert member 1 may be limited to a part thereof. In addition, the outer peripheral surface of the insert member 1 may have, in a part along its axial direction, at least one of a region where an outer peripheral surface length ratio to be described later is less than 1.15 and a region where a first interface parameter to be described later is less than 1.30. At this time, in the region where the outer peripheral surface length ratio is less than 1.15 or the region where the first interface parameter is less than 1.30, the concave-convex portion may or may not be formed. Also, the length in the axial direction of the region where the outer peripheral surface length ratio is less than 1.15 or the region where the first interface parameter is less than 1.30 is preferably less than 50 %, more preferably less than 30 %, and most preferably less than 10 % with respect to the total length of the insert member 1. Moreover, the region where the outer peripheral surface length ratio is less than 1.15 or the region where the first interface parameter is less than 1.30 may be a partial region in the circumferential direction or the entire region in the circumferential direction on the outer peripheral surface of the insert member 1. By limiting the region where the outer peripheral surface length ratio is less than 1.15 or the region where the first interface parameter is less than 1.30 to a part of the outer peripheral surface, the locations in the insert member 1 where heat is easily transmitted can be changed according to the heat-generating portion of the stator, thereby making it possible to prevent deformation of the insert member 1 and the motor case due to heat.

A reference sign 30 in FIG. 2 indicates a contour line (hereinafter, referred to as a "contour line 30") of the outer peripheral surface of the insert member 1 along the shapes of the convex portions 10 and the concave portions 13 in a range of the length d1 (an example of a "predetermined axial direction length" in the present invention) in a predetermined cut surface. In addition, a reference sign 40 indicates an inner peripheral surface of the insert member 1 (hereinafter, referred to as an "inner peripheral surface 40"). The insert member 1 is formed in a cylindrical shape, so that in FIG. 2, the inner peripheral surface 40 is formed as a straight line along the axial direction.

[Outer Peripheral Surface Length Ratio]

The outer peripheral surface length ratio is a value obtained by dividing the length of the contour line 30 in the range of the length d1 by the length d1. In a case where the value of the average maximum height h1 of the concave-convex portion is equivalent (same), it is expected that the larger the value of the outer peripheral surface length ratio is, the more excellent the thermal conductivity is. At this time, the outer peripheral surface length ratio is preferably 1.15 or more, and more preferably 1.30 or more. In addition, the value of the outer peripheral surface length ratio can be easily increased by increasing the value of the average maximum height h1 of the concave-convex portion and increasing the length of the contour line 30, but if the average maximum height h1 of the concave-convex portion is excessively large, the volume occupied by the insert member 1 in the vicinity of the interface between the insert member 1 and the motor case increases, which leads to a larger thermal resistance for conduction, thus posing a risk that the thermal conductivity at that interface may be impaired. Therefore, it is preferable to set the outer peripheral surface length ratio to 3.00 or less. By setting the outer peripheral surface length ratio within such a range and preventing the average maximum height h1 of the concave-convex portion from becoming excessively large, it is possible to provide excellent thermal conductivity at the interface between the insert member 1 and the motor case. Further, the average maximum height h1 of the concave-convex portion is not excessively small, thus making it possible to suppress separation between the insert member 1 and the motor case. The measurement of the outer peripheral surface length ratio is performed on a plurality of cut surfaces, specifically, on six cut surfaces, in one insert member 1, so that an average value of the outer peripheral surface length ratios is obtained.

[Substantive Portion Ratio]

A substantive portion (solid portion) region 21 and a non-substantive portion (void portion) region 22 are defined by the convex portions 10 of the insert member 1. As illustrated in FIG. 2, the substantive portion region 21 and the non-substantive portion region 22 are identified based on whether or not a line segment 20 having the length d1 overlaps with the convex portions 10 when the line segment 20 is superimposed on the predetermined cut surface. More specifically, in the range of the length d1, a region in which the line segment 20 overlaps with the convex portions 10 is defined as the substantive portion region 21, and a region in which the line segment 20 does not overlap with the convex portions 10 is defined as the non-substantive portion region 22. Note that the line segment 20 is a virtual line segment parallel to the inner peripheral surface 40 (i.e., parallel to the central axis C) in the predetermined cut surface, and is a line segment provided for convenience to identify the substantive portion region 21 and the non-substantive portion region 22.

A substantive portion ratio is a value indicating a ratio at which the substantive portion region 21 is formed within the range of the length d1. By moving the line segment 20 at a predetermined pitch along the direction of an arrow A20 in FIG. 2 (from the tip end portion 11 side to the base end portion 12 side in the radial direction), it is possible to obtain the length of the substantive portion region 21 at a measurement height at each measurement point among measurement heights which are distances from the tip end portion 11 in the radial direction. At this time, at an optional measurement height, the ratio of the sum of the lengths of sections in the substantive portion region 21 to the length d1 is referred to as the "substantive portion ratio". The same operation is performed on a plurality of predetermined cut surfaces, so that the substantive portion ratios of the convex portions 10 in respective cut surfaces are aggregated, and the substantive portion ratios at the measurement heights of respective measurement points are averaged, whereby an average substantive portion ratio, which is an average value of the substantive portion ratios based on the plurality of predetermined cut surfaces at the respective measurement heights, can be obtained.

[Substantive Portion Aggregation Chart]

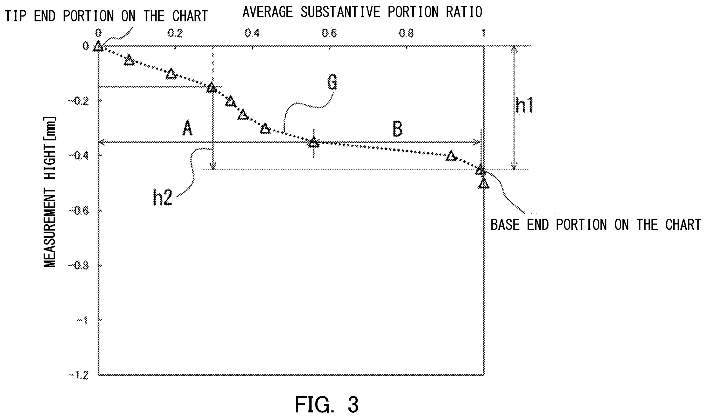

As illustrated in FIG. 2, by moving the line segment 20 toward the base end portions 12 on the insert member 1 (i.e., moving the line segment 20 along the direction of the arrow A20) at the predetermined pitch, repeatedly obtaining the substantive portion ratio until the substantive portion ratio reaches 1.00, and plotting the thus obtained substantive portion ratios on a graph, it is possible to graph the shapes of the plurality of convex portions 10 appearing on the predetermined cut surface as a single aggregate shape. This is referred to as the "substantive portion aggregation chart". The substantive portion aggregation chart is a graph in which the vertical axis represents the measurement height, which is the distance from the tip end portions 11 in the height direction of the convex portions 10, and the horizontal axis represents the substantive portion ratio thereof. In addition, by performing the work of obtaining the substantive portion ratios on the plurality of predetermined cut surfaces, and creating an average substantive portion aggregation chart by sequentially plotting the average substantive portion ratios obtained by the plurality of predetermined cut surfaces, it is possible to grasp the formation state of the convex portions 10 in the insert member 1 on average. At this time, in any predetermined cut surface, a reference point in the height direction is set to "the tip end portion 11 of the convex portion 10 that protrudes most among the plurality of convex portions 10 within the range of the length d1", and the pitch at which the line segment 20 is moved is also set to the same pitch. In this way, the measurement heights can also be uniquely determined even for the plurality of predetermined cut surfaces. FIG. 3 illustrates, as an example of the insert member 1 according to the present embodiment, the average substantive portion aggregation chart in which average substantive portion ratios that can be intermittently obtained from six predetermined cut surfaces of a certain sample are sequentially plotted, with the predetermined pitch being 0.05 mm and the length d1 being 14.7 mm.

The average maximum height h1 of the concave-convex portion is an absolute value of a value from a tip end portion on the chart to a base end portion on the chart on the vertical axis of the average substantive portion aggregation chart. The tip end portion on the chart corresponds to "the tip end portion 11 of the convex portion 10 that protrudes most among the plurality of convex portions 10 within the range of the length d1" in the substantive portion aggregation chart. The measurement height at the tip end portion on the chart is 0 mm, and the substantive portion ratio thereof is 0. The base end portion on the chart is "a position where the substantive portion ratio plotted sequentially from the tip end portion 11 side toward the base end portion 12 side exceeds 0.98 for the first time" in the substantive portion aggregation chart, and is "a position where the average substantive portion ratio plotted sequentially from the tip end portion 11 side toward the base end portion 12 side exceeds 0.98 for the first time" in the average substantive portion aggregation chart. Note that the substantive portion ratio at each measurement point of the substantive portion aggregation chart is measured from the tip end portion 11 side of the convex portions 10 positioned on the upper side toward the central axis C side positioned on the lower side, and thus the measurement height at each measurement point is displayed as a negative value. The same applies to the average substantive portion aggregation chart obtained from a plurality of substantive portion aggregation charts, but the actual height of the concave-convex portion and the average maximum height h1 of the concave-convex portion are the absolute values of the values on the vertical axis on the average substantive portion aggregation chart, and the average maximum height h1 is a distance from the base end portion on the chart to the tip end portion on the chart. In addition, a line connecting each measurement point plotted on the average substantive portion aggregation chart is referred to as an "average substantive portion curve".

The length d1 of the line segment 20, which is a predetermined axial length, is set to 14.7 mm in principle, but may be appropriately changed in consideration of the sizes of the convex portions 10 and the concave portions 13 of a measurement sample.

[Measurement Method]

[Preparation of Samples for Measurement]

Hereinafter, a method for measuring the length of the contour line 30 and the substantive portion ratio will be described. First, a method of preparing a measurement sample will be described. The insert member 1, which is cut in a direction including the central axis C and along the axial direction, is further cut in a cross section perpendicular to the axial direction so as to have a size that can be embedded in resin and polished, and resin embedding is performed so that one cut surface for measuring the length of the contour line 30 and the substantial portion ratio becomes a surface to be polished. After the resin has solidified, the sample is polished with waterproof emery paper in running water. At this time, the grit size of the waterproof emery paper is changed in the following order: #220, #400, #800, #1000, and #1500. When the polishing is completed, the length of the contour line 30 and the substantive portion ratio are measured. The surface observed after polishing corresponds to the predetermined cut surface.

[Outer Peripheral Surface Length Ratio Measurement Method]

In the present embodiment, a digital microscope RX-100 manufactured by HIROX Co., Ltd. was used for measuring the length of the contour line 30. The objective lens magnification during measurement is 20x or 40x, and in a case where the average maximum height h1 of the concave-convex portion is large, for example, in a case of exceeding 0.30 mm, 20x is used. In the case of the equipment used this time, when the objective lens magnification is 20x, the length of the horizontal axis of a monitor is 14.7 mm, which is taken as the length d1. After setting the polished measurement sample, the measurement sample is set so that the inner peripheral surface 40 of the insert member 1 is parallel to the horizontal axis of the grid displayed on the observation monitor, and then the measurement sample is moved in parallel to a position where the outer peripheral surface can be observed. When the gradation density is adjusted by clicking a portion of the insert member 1 on the monitor using an "automatic area" tool in the software attached to the microscope, the area and the circumferential length of the portion of the insert member 1 can be automatically measured by the difference in gradation density between the insert member 1 and the resin used for embedding. At this time, the gradation density is set to a value that allows the insert member 1 to be selected without excess or deficiency. Since the circumferential length to be measured is the entire circumference of the insert member 1 on the monitor, the length corresponding to the portion other than the contour line 30 of the insert member 1 is determined and subtracted from the measured entire circumferential length. The length of the contour line 30 is determined in this manner. At this time, the length of the portion other than the contour line 30 can be obtained using an "automatic width" tool attached to the microscope. The outer peripheral surface length ratio can be obtained by dividing the length of the contour line 30 thus obtained by the length d1.

[Measurement Method for Substantive Portion Ratio]

In the measurement of the substantive portion ratio, a digital microscope RX-100 manufactured by Hirox Co., Ltd. is used, and an objective lens magnification of 20x or 50x is used at the time of measurement. In addition, in a case where the average maximum height h1 of the concave-convex portion is large, for example, 0.20 mm or more, a 20x magnification is used. The grid and automatic width tools provided by the microscope's software were used. The polished measurement sample is set so that the inner peripheral surface 40 of the insert member 1 is parallel to the grid horizontal axis displayed on the observation monitor. Thereafter, the observation sample is moved in parallel to a position where the outer peripheral surface can be observed. Then, the measurement sample is measured in the horizontal axis direction using the automatic width tool. The measurement using the automatic width tool is an automatic measurement using gradation density, and hence the gradation density is adjusted each time to ensure proper automatic identification between an insert member area corresponding to the substantive portion region 21 and a resin area corresponding to the non-substantive portion region 22, and then the tool is relatively moved at the predetermined pitch to measure the length of the substantive portion region 21 at any measurement height. The line segment 20 in the present embodiment indicates the measurement position of the automatic width tool. By moving the line segment 20 along the radial direction of the insert member 1 from the tip end portion 11 side toward the base end portion 12 side at the predetermined pitch, it is possible to measure the axial length of the substantive portion region 21 at any measurement height from the tip end portion 11. At this time, the measurement is performed by moving the line segment 20 on one cut surface from the tip end portion 11 of the convex portion 10, which protrudes most in the range of the length d1, toward the base end portion 12 side thereof at a predetermined pitch of 0.05 mm or 0.025 mm. In a case where an objective lens magnification of 50x is used, the predetermined pitch may be 0.025 mm.

FIG. 2 illustrates a case where the line segment 20 is located at a position 20a and a case where the line segment 20 is located at a position 20b. The position 20a is the position of the tip end portion 11 of the convex portion 10 which protrudes most in the range of the length d1. When the line segment 20 is at the measurement height indicated by the position 20a, the line segment 20 overlaps with the tip end portion 11 of that convex portion 10. Using this as a reference, the line segment 20 is moved at the predetermined pitch in the direction indicated by the arrow A20 (toward the base end portion 12 side). The position 20b is an example of the measurement height in a case where the movement of the line segment 20 is repeated any number of times at the predetermined pitch. When the line segment 20 is located at a measurement height indicated by the position 20b, it can be said that the insert member 1 defines the substantive portion region 21, indicated by broken lines, and the non-substantive portion region 22, indicated by solid lines, of the line segment 20. The line segment 20 is moved along the arrow A20, and from a position where the substantive portion ratio to be described later exceeds 0.98 for the first time, the line segment 20 is further moved along the arrow A20, and when the entire range of the length d1 in the line segment 20 becomes the substantive portion region 21 (i.e., when the substantive portion ratio becomes 1.00), the measurement is ended.

[Non-substantive Portion Ratio]

A non-substantive portion ratio is a value that satisfies the following relation in the substantive portion aggregation chart.

[the non-substantive portion ratio at an optional measurement height] = [the substantive portion ratio of the base end portion on the chart] - [the substantive portion ratio at the optional measurement height] In addition, in the average substantive portion aggregation chart, the following relationship holds true.

[the average non-substantive portion ratio at an optional measurement height] = [the average substantive portion ratio of the base end portion on the chart] - [the substantive portion ratio at the optional measurement height]

[Parameters for Average Substantive Portion Aggregation Chart]

In the average substantive portion aggregation chart, the convex portions 10 and the concave portions 13 are preferably formed so that the average maximum height h1 of the concave-convex portion is within a range of 0.15 mm or more and 1.50 mm or less. More preferably, the average maximum height h1 of the concave-convex portion is within a range of 0.20 mm or more and 1.00 mm or less. In this case, the length of the contour line 30 can be increased by increasing the average maximum height h1 of the concave-convex portion, but if the average maximum height h1 of the concave-convex portion is too large, the volume occupied by the convex portions 10 will increase in the vicinity of the interface between the insert member 1 and the motor case, which leads to a larger thermal resistance for heat conduction, thus posing a risk of impairing thermal conductivity. On the other hand, by increasing the length of the contour line 30, i.e., the interface length ratio while setting the average maximum height h1 of the concave-convex portion to 1.50 mm or less, the thermal conductivity from the insert member 1 to the motor case and the heat dissipation from the motor case are facilitated.

In addition, by setting the average maximum height h h1 of the concave-convex portion to 1.50 mm or less, it is possible to realize a reduction in weight and size of the insert member 1. However, when the average maximum height h1 of the concave-convex portion is excessively small, the joining force between the insert member 1 and the motor case is insufficient, and there is a risk that the insert member 1 and the motor case may be peeled off from each other. In general, the larger the joining force between the insert member 1 and the motor case, the better the thermal conductivity, and hence, in order to maintain the joining force between the insert member 1 and the motor case, it is preferable that the average maximum height h1 of the concave-convex portion be 0.15 mm or more. This makes it easier to suppress the insert member 1 from peeling off from the motor case.

Here, in the average substantive portion aggregation chart, an average substantive portion ratio at a position moved 0.10 mm in height from the base end portion on the chart toward the tip end portion on the chart is referred to as a "first average substantive portion ratio", and an average non-substantive portion ratio obtained based on the first average substantive portion ratio is referred to as a "first average non-substantive portion ratio". The value of the first average substantive portion ratio is defined as A, and the value of the first average non-substantive portion ratio is defined as B. At this time, a value obtained by dividing the outer peripheral surface length ratio by A is referred to as a "first interface parameter" for the sake of convenience. The first interface parameter helps to grasp the shape of the convex portions 10 in the vicinity of the base end portions 12. For example, a heating element such as the stator is disposed inside the insert member 1. At this time, the heat generated from the heating element is transmitted from the vicinity of the base end portions 12 of the convex portions 10 to the tip end portion 11 side where the motor case or the like is disposed. Therefore, in order to efficiently transfer the heat of the heating element to the motor case, the shape of the insert member 1 in the vicinity of the base end portions 12 is preferably as flat as possible. Therefore, the first average substantive portion ratio is preferably a value as small as possible. That is, the first interface parameter preferably has a large value. In FIG. 3, the first average substantive portion ratio at the position moved 0.10 mm in height from the base end portion on the chart toward the side of the tip end portion on the chart is shown as A, and the first average non-substantive portion ratio at that position is shown as B.

In addition, a value obtained by dividing the outer peripheral surface length ratio by a height from the base end portion on the chart to a position where the average substantive portion ratio is 0.30 is referred to as a "second interface parameter" for convenience. In FIG. 3, the "height from the base end portion on the chart to the position where the average substantive portion ratio is 0.30" is indicated by h2. In other words, the height h2 is "a difference between the measurement height of the base end portion on the chart and the measurement height at the position where the average substantive portion ratio is 0.30". Here, in a case where there are a plurality of positions where the average substantive portion ratio is 0.30, a position closest to the base end side on the chart is set as an evaluation target. That is, the height h2 is a height from the base end portion on the chart to the position closest to the side of the base end portion on the chart at which the average substantive portion ratio is 0.30. The second interface parameter makes it possible to easily grasp, based on the average substantive portion aggregation chart, the shapes of the convex portions 10 of the insert member 1 from the base end portion on the chart to the position where the average substantive portion ratio is 0.30. By using the first interface parameter and the second interface parameter described above, the outer peripheral surface length ratio can be normalized at a fixed position in the average substantive portion aggregation chart, thus making it easier to confirm the correlation between the shape of the concave-convex portion and the thermal conductivity.

The measurement height at the position where the average substantive portion ratio is 0.30 can be obtained based on two points, i.e., a point where the average substantive portion ratio is less than 0.30 and a point where the average substantive portion ratio exceeds 0.30, which are continuous in the average substantive portion aggregation chart. More specifically, it can be obtained from a function of a straight line connecting a point at which the average substantive portion ratio on the average substantive portion aggregation chart is less than 0.30 and a point which is contiguous to that point and at which the average substantive portion ratio exceeds 0.30.

By arranging the shape of the concave-convex portion in the insert member 1 of the present invention based on the outer peripheral surface length ratio and the average substantive portion aggregation chart using the first interface parameter and the second interface parameter, it is possible to identify the insert member 1 with further improved thermal conductivity at the interface between the insert member 1 and the motor case.

[Testing and Simulation]

Testing and simulation using samples were performed to evaluate the insert members 1 of Examples 1 to 11 of the present invention and insert members according to Comparative Examples 1 to 3. More specifically, measurement of various parameters, physical cutting test, thermal conductivity measurement, and surface temperature simulation were performed on the insert members of the Examples and the Comparative Examples (hereinafter, referred to as Examples and the like).

[Measurement of Various Parameters]

Various parameters of the insert member according to the Examples and the like were measured. Table 1 shows the results of respective measurement items of the insert members according to the Examples and the like. In measurement item 1, the insert member in each of the Examples and the like was cut to determine the outer peripheral surface length ratio thereof. In measurement items 2 to 8, respective values were obtained using an average substantive portion aggregation chart in each of the Examples and the like. When the average substantive portion aggregation chart in each of the Examples and the like was created, the predetermined pitch was set to 0.05 mm or 0.025 mm. In addition, in the measurement of the outer peripheral surface length ratio, the predetermined axial direction length was set to 14.7 mm in Examples 1 to 3 and 6 to 11 and Comparative Examples 1 to 3, and was set to 7.35 mm in Examples 4, 5. Also, in the measurement of the average substantive portion ratio, the predetermined axial direction length was set to 14.7 mm in Examples 1 to 3 and 6 to 11 and Comparative Examples 1 and 3, and was set to 5.57 mm in Examples 4, 5 and Comparative Example 2. Note that the units in parentheses for each measurement item indicate the units used, and items without units listed are dimensionless quantities.

[1. Outer Peripheral Surface Length Ratio]

The outer peripheral surface length ratio was measured as measurement item 1. In this case, the outer peripheral surface length ratio was determined by cutting and polishing the insert member in each of the Examples and the like along the axial direction on a virtual plane that includes the central axis C, and measuring the length of the contour line 30. In addition, in order to ensure the predetermined axial length so that the contour line 30 can be obtained, the insert member is also cut in a direction perpendicular to the axial direction (radial direction). The cut surface thus obtained was observed with a microscope. The outer peripheral surface length ratio was obtained by cutting out optional six predetermined cut surfaces from one insert member and determining their average value.

[2. Average Maximum Height h1 (mm) of Concave-Convex Portion]

As the measurement item 2, the average maximum height h1 of the concave-convex portion was measured using the average substantive portion aggregation chart in each of the Examples and the like. In Comparative Example 1, since the numerical value of the average maximum height h1 of the concave-convex portion was small, measurements for other items were not performed.

[3. First Average Substantive Portion Ratio A]

As measurement item 3, the first average substantive portion ratio A was obtained using the average substantive portion aggregation chart in each of the Examples and the like. As described above, the first average substantive portion ratio A is the average substantive portion ratio at the position moved 0.10 mm in height from the base end portion on the chart toward the side of the tip end portion on the chart.

[4. First Interface Parameter]

As measurement item 4, the first interface parameter was obtained by dividing the outer peripheral surface length ratio obtained in measurement item 1 by the first average substantive portion ratio A obtained in measurement item 3.

[5. 0.10 / First Average Non-Substantial Portion Ratio B (mm)]

As measurement item 5, the gradient of a straight line connecting two points, i.e., the measurement position of the first average substantive portion ratio A and the base end portion on the chart, (hereinafter, referred to as the inclination of the average substantive portion curve) in the average substantive portion aggregation chart of each of the Examples and the like was obtained. In each of the Examples and the like, the first average non-substantive portion ratio B is determined by subtracting the value of the first average substantive portion ratio A obtained in measurement item 3 from the average substantive portion ratio of the base end portion on the chart. By checking the inclination of the average substantive portion curve, it is possible to help to understand the shapes of the convex portions in the vicinity of their base end portions. The inclination of the average substantive portion curve is obtained by [0.10 / the first average non-substantive portion ratio B].

[6. 0.10 x First Average Non-Substantial Portion Ratio B (mm)]

As measurement item 6, the area of a predetermined region was obtained, as follows, in the average substantive portion aggregation chart of each of the Examples and the like. Similar to measurement item 5, the first average non-substantive portion ratio B is determined, in each of the Examples and the like, by subtracting the value of the first average substantive portion ratio A obtained in measurement item 3 from the average substantive portion ratio of the base end portion on the chart. Here, the predetermined region is a rectangular region in the average substantive portion aggregation chart, having a height of 0.10 mm from the base end portion on the chart and a width of the first average non-substantive portion ratio B, and including the average substantive portion curve from the base end portion on the chart to a position moved 0.10 mm in height toward the side of the tip end portion on the chart. The area of the predetermined region is obtained by [0.10 × the first average non-substance portion ratio B]. This helps to grasp the shape of the concave-convex portion in the vicinity of the base end portions of the convex portions.

[7. Height h2 (mm) from the Base End Portion on the Chart to the Position where the Average Substantive Portion Ratio is 0.30]

As measurement item 7, the height h2 was obtained which is the height from the base end portion on the chart to the position where the average substantive portion ratio is 0.30 in each of the Examples and the like. As the height h2 decreases, the shape of the insert member from the base end portion on the chart to the position where the average substantive portion ratio is 0.30 becomes closer to a flat shape.

[8. Second Interface Parameter (1/mm]

As measurement item 8, the second interface parameter was determined by dividing the outer peripheral surface length ratio obtained in measurement item 1 by the height h2 obtained in measurement item 7.
The measurement results of the various parameters measured as described above are shown in table 1.

[Table 1]

| Measurement items | | | | | | | | |
|---|---|---|---|---|---|---|---|---|
| | 1. | 2. | 3. | 4. | 5. | 6. | 7. | 8. |
| Example 1 | 1.33 | 0.95 | 0.71 | 1.88 | 0.35 | 0.029 | 0.21 | 6.31 |
| Example 2 | 1.39 | 0.65 | 0.56 | 2.47 | 0.23 | 0.043 | 0.19 | 7.14 |
| Example 3 | 1.34 | 0.45 | 0.58 | 2.33 | 0.24 | 0.042 | 0.30 | 4.47 |
| Example 4 | 1.51 | 0.30 | 0.42 | 3.61 | 0.17 | 0.058 | 0.15 | 10.37 |
| Example 5 | 1.66 | 0,20 | 0.36 | 4.67 | 0.16 | 0.064 | 0.11 | 15.06 |
| Example 6 | 1.29 | 0.25 | 0.79 | 1.64 | 0.50 | 0.020 | 0.18 | 7.10 |
| Example 7 | 1.24 | 0.25 | 0.80 | 1.54 | 0.53 | 0.019 | 0.18 | 6.83 |
| Example 8 | 1.17 | 0.25 | 0.89 | 1.32 | 0.99 | 0.010 | 0.18 | 6.44 |
| Example 9 | 1.36 | 0.70 | 0.87 | 1.57 | 0.75 | 0.013 | 0.47 | 2.87 |
| Example 10 | 2.23 | 1.20 | 0.88 | 2.54 | 0.99 | 0.010 | 0.48 | 4.65 |
| Example 11 | 1.58 | 1.05 | 0.96 | 1.65 | 3.98 | 0.003 | 0.51 | 3.09 |
| Comparative Example 1 | 1.03 | - | - | - | - | - | - | - |
| Reference Example 2 | 1.14 | 0.125 | 0.16 | 7.18 | 0.12 | 0.084 | 0.08 | 14.71 |

(continued)

| Measurement items | | | | | | | | |
|---|---|---|---|---|---|---|---|---|
| | 1. | 2. | 3. | 4. | 5. | 6. | 7. | 8. |
| Comparative Example 3 | 3.12 | 2.15 | 0.92 | 3.40 | 1.61 | 0.006 | 0.58 | 5.35 |

1. Outer surface length ratio
2. Average maximum height h1 of concave-convex portion (mm)
3. First substantive portion ratio A
4. First interface parameter
5. 0.10/First non-substantive portion ratio B
6. 0.10*First non-substantive portion ratio B
7. Height h2 from base end portion on chart to substantive portion ratio of 0.30 (mm)
8. Second interface parameter

[Physical Cutting Test]

In the physical cutting test, in each of the Examples and the like, a composite was prepared in which an aluminum alloy was used as an outer member and an insert member was cast into the outer member. The outer member mentioned here means a member located on the radially outer side of the insert member, exemplified by a motor case or the like. Further, the composite was cut to obtain a test piece of 20 mm × 20 mm. For each of the Examples and the like, the presence or absence of peeling between the insert member and the outer member when the test piece was cut out a plurality of times was determined to evaluate the joining property between the insert member and the outer member. More specifically, test pieces were cut out from each of Examples and the like at six locations, and the presence or absence of peeling was determined. Table 2 shows criteria for the determination.

[Table 2]

| Evaluation | Evaluation Symbol |
|---|---|
| No peeling in all cutting tests | A |
| Peeling in part of cutting tests | B |
| Peeling in all cutting tests | C |

[Thermal Conductivity Measurement]

Of the test pieces used in the physical cutting test, those which did not peel off were used to prepare test pieces for measuring thermal conductivity, each having a diameter of 10 mm and a thickness of 3 mm, and then, the test pieces for thermal conductivity measurement were used to measure their thermal conductivities by means of a laser flash method. At this time, while observing a side surface of each test piece for thermal conductivity measurement, the center of the height of the concave-convex portion thereof was adjusted to be positioned at the center of the thickness of the test piece for thermal conductivity measurement. Note that, for test pieces in which the insert member and the outer member peeled off from each other when cutting out, the thermal conductivity was determined to be unmeasurable (0W/m·K), and for test pieces in which peeling occurred several times in a plurality of tests or for the test pieces in which no peeling occurred in a plurality of tests, an average value of the test pieces which did not peel was calculated and is shown in table 6.

[Surface Temperature Simulation]

In each of the Examples and the like, a model was prepared in which the thickness of an insert member was 2 mm, the thickness of a composite portion (an interface portion between the insert member and an outer member) was 3 mm, and the thickness of the outer member was 2 mm, and the surface temperature of the outer member was simulated. In this case, the surface temperature of the outer member was calculated, on the assumption that the inner surface temperature of the insert member was 150°C, the fluid temperature on the outer periphery of the outer member was 50°C, and a cooling fluid was present around the outer periphery of the outer member. In addition, for heat transfer from the surface of the outer member to the fluid, the heat transfer coefficient was set to 200 W/m 2·K. Based on the surface temperature of the outer member obtained by the simulation, the heat dissipation was evaluated according to the criteria shown in Table 3. At this time, it can be said that the higher the surface temperature is, the more efficiently the internal heat can be transferred, and the better the heat dissipation is.

[Table 3]

| Evaluation | Evaluation Symbol |
|---|---|
| Surface temperature is 147 °C or higher | AA |
| Surface temperature is 145 °C or higher | A |
| Surface temperature is 135 °C or higher | B |
| Surface temperature is lower than 135 °C | C |

[Compactness Evaluation]

Compactness was evaluated according to the determination criteria shown in Table 4 based on the average maximum height h1 of the concave-convex portion which is measurement item 2 in the measurement of the various parameters described above.

[Table 4]

| Evaluation | Evaluation Symbol |
|---|---|
| Concave-convex portion average height h1 is 0.25 mm or less | AA |
| Concave-convex portion average height h1 is 1 mm or less | A |
| Concave-convex portion average height h1 is less than 1.5 mm | B |
| Concave-convex portion average height h1 is 1.5 mm or more | C |

In the overall evaluation, assessments were made based on evaluation symbols for the respective measurement items, as shown in Table 5.

[Table 5]

| Evaluation | Evaluation Symbol |
|---|---|
| AA evaluation with no B evaluation in heat dissipation item | AA |
| AA evaluation in heat dissipation item and B evaluation in compactness item | A |
| A evaluation with no B evaluation in heat dissipation item | |
| B evaluation in heat dissipation item | B |
| C evaluation in heat dissipation item or compactness item | C |

The results of the sample tests measured as described above and the overall evaluation are shown in Table 6.

[Table 6]

| | Evaluation | | | | | Overall evaluation |
|---|---|---|---|---|---|---|
| | 1. | 2. | 3. | 4. | 5. | |
| Example 1 | A | 27.6. | 146.7 | A | A | A |
| Example 2 | A | 45.4 | 147.5 | AA | A | AA |
| Example 3 | A | 37.8 | 147.2 | AA | A | AA |
| Example 4 | A | 56.0 | 147.7 | AA | A | AA |
| Example 5 | A | 56.2 | 147.7 | AA | AA | AA |
| Example 6 | B | 18.1 | 145.6 | A | AA | A |
| Example 7 | B | 10.1 | 143.3 | B | AA | B |

(continued)

| | Evaluation | | | | | Overall evaluation |
|---|---|---|---|---|---|---|
| | 1. | 2. | 3. | 4. | 5. | |
| Example 8 | B | 5.0 | 138.3 | B | AA | B |
| Example 9 | A | 25.8 | 146.5 | A | A | A |
| Example 10 | A | 55.1 | 147.7 | AA | B | A |
| Example 11 | A | 35.7 | 147.1 | AA | B | A |
| Comparative Example 1 | C | 0 | 106.3 | C | AA | C |
| Reference Example 2 | C | 0 | 106.3 | C | AA | C |
| Comparative Example 3 | A | 2.0 | 106.3 | C | C | C |

1. Presence or absence of peeling
2. Thermal conductivity (W/m/K)
3. Surface temperature (°C)
4. Heat dissipation
5. Compactness

From the results shown in table 6, it was confirmed that in the coverall evaluation, all of Examples 1 to 11 were superior to all of Comparative Examples 1 to 3. Further, it was confirmed that Examples 2, 3, 4, and 5 were particularly excellent.

In addition, from the comparison between Examples 1 to 8 and 10 and Comparative Examples 1 to 3, it was confirmed that the thermal conductivity at the interface between the insert member and the motor case was increased by forming the concave-convex portion in such a manner that the first interface parameter was 1.30 or more and the second interface parameter was 4.00 or more.

Moreover, in Examples 4, 5, and 10, the outer peripheral surface of the insert member was subjected to a roughening treatment by thermal spraying or cold spraying, and it was confirmed that the thermal conductivity was higher than in the other Examples and the like.

Further, by comparing Examples 1 and 9 with the other Examples and the like, it could be confirmed that even in a case where the outer peripheral surface length ratio was large, the thermal conductivity did not become high in a case where the average maximum height $h1$ of the concave-convex portion was relatively large as in Examples 1 and 9. Furthermore, it was confirmed that when the average maximum height $h1$ of the concave-convex portion was excessively large as in Comparative Example 3, the thermal conductivity at the interface between the insert member and the motor case became low.

From the above results, it was confirmed that examples such as Examples 4 and 5, in which the value of the first average substantive portion ratio A was small and the value of the first interface parameter was large, had high thermal conductivity. Among the respective Examples, in Example 5 in which the first interface parameter was the largest, the thermal conductivity at the interface between the insert member and the motor case was the largest.

From the above results, with reference to Examples 1 to 11, it was confirmed that the slope of the average substantive portion curve in the average substantive portion aggregation chart was preferably $0.10/B \leqq 1.30$. Also, with reference to Examples 2 to 5, it was confirmed that the thermal conductivity at the interface between the insert member and the motor case was high when the inclination of the average substantive portion curve was small.

From the above results, with reference to Examples 1 to 11, it was confirmed that the area of the predetermined region in the average substantive portion aggregation chart obtained in measurement item 6 was preferably $0.10 \times B \geqq 0.01$. Also, with reference to Examples 2 to 5, it was confirmed that the thermal conductivity at the interface between the insert member and the motor case was high when the area of the predetermined region was large.

From the above results, it was found that, as in Comparative Examples 1 and 2, when the outer peripheral surface length ratio was less than 1.15, the insert member and the outer member were peeled off when the test pieces were cut out. Also, as in Examples 6 to 8, in the case where the outer peripheral surface length ratio was larger than 1.15 and smaller than 1.30, peeling occurred in some cases, and hence, it was confirmed that the outer peripheral surface length ratio was more preferably 1.30 or more.

From the above results, it was confirmed that when the height $h2$ was 0.40 mm or less, as in Examples 1 to 5, the thermal conductivity was high. In addition, in Examples 6 to 8, although the height $h2$ was 0.40 mm or less, peeling was observed when cutting out the test pieces, and the joining property was not necessarily high. Therefore, it was confirmed that the thermal conductivity was low.

[Operation and Effects]

By forming the concave-convex portion according to the present invention on the outer peripheral surface of the insert member 1, it is possible to improve the thermal conductivity at the interface between the insert member 1 and the motor case so as to efficiently dissipate the heat generated by the heating element such as the stator to the outside.

The plurality of convex portions 10 are arranged on the outer peripheral surface of the insert member 1 in such a manner that adjacent convex portions 10 are spaced apart at an appropriate interval. Accordingly, a casting material to be poured into the mold is also spread between the plurality of convex portions 10, so that it is possible to suppress the occurrence of gaps between the motor case and the insert member 1, thereby improving the thermal conductivity at the interface between the motor case and the insert member 1.

In the insert member 1 of the present invention, the convex portions 10 and concave portions 13 are formed within the range of the length d1 so as to ensure the length of the contour line 30 without making the concave-convex portion excessively large. Therefore, the thermal conductivity at the interface between the insert member 1 and the motor case can be favorably controlled. Accordingly, it is possible to improve the thermal conductivity from the insert member 1 to the motor case and the heat dissipation of the rotary electric machine itself, while suppressing an increase in the size and mass of the motor case itself due to an increase in the thickness of the motor case and realizing a reduction in the weight and size of the rotary electric machine.

Hereinabove, the embodiment according to the present invention has been described, but each aspect disclosed in the present specification can be combined with any other feature disclosed in the present specification.

[Reference Signs List]

1:  insert member for rotary electric machine
10:  convex portions
13:  concave portions
20:  line segment
30:  contour line
40:  inner peripheral surface
C:  central axis of the insert member

**Claims**

1.  An insert member for a rotary electric machine, which is a substantially cylindrical insert member to be cast into an aluminum alloy motor case of the rotary electric machine, wherein

    a concave-convex portion including concave portions and convex portions is formed on an outer peripheral surface of the insert member; and
    when a line along a contour of the outer peripheral surface including a contour of the concave-convex portion within a range of a predetermined axial length, in one cut surface which is one of cut surfaces appearing one by one on both sides of a central axis of the insert member when the insert member is cut into two halves along an axial direction by a virtual plane including the central axis, is defined as a contour line, an outer peripheral surface length ratio, which is a value obtained by dividing a length of the contour line by the predetermined axial length, is 1.15 or more.

2.  The insert member for a rotary electric machine according to claim 1, wherein

    when a line segment parallel to an inner peripheral surface of the insert member is superimposed on the one cut surface in the range of the predetermined axial length, a substantive portion region in which, on the line segment, the insert member overlaps with the line segment and a non-substantive portion region in which, on the line segment, the insert member does not overlap with the line segment, are defined in the insert member;
    on the line segment, a value indicating a proportion of the substantive portion region within the range of the predetermined axial length is defined as a substantive portion ratio;
    a diagram, in which in the one cut surface of the insert member, a value of the substantive portion ratio at each measurement point, which is obtained by moving the line segment from a tip end portion of a convex portion that protrudes most in the concave-convex portion toward a base end portion side of the convex portion along a height direction of the concave-convex portion at a predetermined pitch, is sequentially plotted, with a horizontal axis representing the substantive portion ratio and a vertical axis representing a distance from the tip end portion in the height direction as a measurement height, is defined as a substantive portion aggregation chart;

an average of the substantive portion ratios at the respective measurement points based on a plurality of the one cut surfaces is defined as an average substantive portion ratio, and the substantive portion aggregation chart in which the average substantive portion ratio is sequentially plotted is defined as an average substantive portion aggregation chart;

in the average substantive portion aggregation chart, a position where the average substantive portion ratio is 0 is defined as a tip end portion on the chart, and a position where the average substantive portion ratio sequentially plotted from the tip end portion side toward the base end portion side exceeds 0.98 for the first time is defined as a base end portion on the chart; and

when a distance from the tip end portion on the chart to the base end portion on the cart is defined as an average maximum height of the concave-convex portion, the average maximum height of the concave-convex portion is 0.15 mm or more and 1.50 mm or less.

3. The insert member for a rotary electric machine according to claim 2, wherein when the average substantive portion ratio at a position moved 0.10 mm in height from the base end portion on the chart toward the side of the tip end portion on the chart is denoted as A, with a value obtained by dividing the outer peripheral surface length ratio by A being defined as a first interface parameter, the first interface parameter is 1.30 or more.

4. The insert member for a rotary electric machine according to claim 1, wherein when a half of a value obtained by subtracting an inner diameter of the insert member from an outer diameter thereof is defined as a thickness of the insert member, the thickness of the insert member is 0.8 % or more of the outer diameter of the insert member.

5. The insert member for a rotary electric machine according to claim 1, wherein the outer peripheral surface is subjected to a surface roughening treatment.

6. The insert member for a rotary electric machine according to claim 3, wherein the outer peripheral surface of the insert member has, in a part thereof in the axial direction, at least one of a region in which the outer peripheral surface length ratio is less than 1.15 and a region in which the first interface parameter is less than 1.30.

7. The insert member for a rotary electric machine according to claim 3, wherein in the average substantive portion aggregation chart, when a value obtained by subtracting the average substantive portion ratio at a certain measurement height from the average substantive portion ratio at the base end portion on the chart is defined as an average non-substantive portion ratio, with the average non-substantive portion ratio at a position moved 0.10 mm in height from the base end portion on the chart toward the tip end portion on the chart being denoted as B, $0.10/B \leq 1.30$ is satisfied.

8. The insert member for a rotary electric machine according to claim 3, wherein in the average substantial portion aggregation chart, when a value obtained by subtracting the average substantial portion ratio at a certain measurement height from the average substantial portion ratio at the base end portion on the chart is defined as an average non-substantial portion ratio, with the average non-substantial portion ratio at a position moved 0.10 mm in height from the base end portion on the chart to the tip end portion on the chart being denoted as B, $0.10 \times B \geq 0.01$ is satisfied.

9. The insert member for a rotary electric machine according to claim 3, wherein in the average substantive portion aggregation chart, a height from the base end portion on the chart to a position where the average substantive portion ratio is 0.30 is 0.40 mm or less.

10. The insert member for a rotary electric machine according to claim 3, wherein in the average substantive portion aggregation chart, a second interface parameter, which is a value obtained by dividing the outer peripheral surface length ratio by a height from the base end portion on the chart to a position where the average substantive portion ratio is 0.30, is 4.00 or more.

FIG. 1

A-A' CROSS SECTION

RADIAL DIRECTION

AXIAL DIRECTION

FIG. 2

EP 4 783 425 A1

FIG. 3

## INTERNATIONAL SEARCH REPORT

| International application No. |
| --- |
| **PCT/JP2024/031149** |

### A. CLASSIFICATION OF SUBJECT MATTER

*H02K 5/06*(2006.01)i
FI:   H02K5/06

According to International Patent Classification (IPC) or to both national classification and IPC

### B. FIELDS SEARCHED

Minimum documentation searched (classification system followed by classification symbols)

H02K5/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 6655560 B1 (HITACHI AUTOMOTIVE SYSTEMS, LTD.) 26 February 2020 (2020-02-26)<br>paragraphs [0011]-[0038], fig. 1-3 | 1-10 |
| Y | JP 2007-16736 A (TOYOTA JIDOSHA KABUSHIKI KAISHA) 25 January 2007 (2007-01-25)<br>paragraphs [0007], [0054]-[0059], [0125]-[0140], fig. 1, 17 | 1-10 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 September 2024** | **08 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/031149**

| Patent document cited in search report | Publication date (day/month/year) | Patent family member(s) | Publication date (day/month/year) |
|---|---|---|---|
| JP 6655560 B1 | 26 February 2020 | (Family: none) | |
| JP 2007-16736 A | 25 January 2007 | US 2007/0012177 A1 paragraphs [0007], [0035]-[0044], [0119]-[0134], fig. 1, 17 <br> CN 101218048 A <br> KR 10-2008-0027929 A | |

Form PCT/ISA/210 (patent family annex) (July 2022)

## REFERENCES CITED IN THE DESCRIPTION

**Patent documents cited in the description**

- JP 2001169500 A
- JP 6655560 B